# DEMANDE DE BREVET EUROPEEN

(11) **EP 4 141 035 A1**
(43) Date de publication de la demande: **01.03.2023**
(21) Numéro de dépôt: 22203326.8
(22) Date de dépôt: 18.12.2020
(51) Int. Cl.: C08F 12/08, C08F 4/34, C08F 2/18, C08J 9/20

(54) **PROCÉDÉ DE POLYMÉRISATION D'UNE SUSPENSION AQUEUSE DE STYRÈNE À L'AIDE D'AU MOINS UN PEROXYDE ORGANIQUE HÉMI-PEROXYACÉTAL**

(30) Priorité: 18.12.2019 FR 1914739
(62) Demande divisionnaire de: 20848851.0
(71) Demandeur: ARKEMA FRANCE, 92700 Colombes (FR)
(72) Inventeur: VAN HEMELRYCK, Bruno, 69491 PIERRE-BENITE CEDEX (FR); MASI, Isabelle, 69491 PIERRE-BENITE CEDEX (FR)
(74) Mandataire: Arkema Patent

(57) **Abrégé**

La présente invention concerne un procédé de polymérisation d'une suspension aqueuse de styrène à l'aide d'au moins un peroxyde organique hémi-peroxyacétal, ledit procédé comprenant une étape a) de maintien de ladite suspension aqueuse de styrène comprenant ledit peroxyde organique hémi-peroxyacétal à une température inférieure à la température de demi-vie à 1 heure dudit peroxyde organique hémi-peroxyacétal, de préférence inférieure de 5 à 25°C à la température de demi-vie à 1 heure dudit peroxyde organique, pendant au moins 30 minutes.

## Description

La présente invention concerne un procédé de préparation de polystyrène expansible ainsi qu'un polystyrène expansible pouvant être obtenu par un tel procédé.

L'une des méthodes connues de production de polymères de type polystyrène expansible, appelé PSE dans la suite, est la polymérisation en suspension aqueuse. Il s'agit généralement d'un procédé de type batch dans lequel deux initiateurs de polymérisation solubles dans le monomère ou plus sont employés, avec un profil de température augmentant par paliers. Il a également été proposé d'injecter les initiateurs en continu dans le réacteur au cours de la polymérisation. Les initiateurs du procédé sont choisis en fonction de leur température de demi-vie, pour alimenter la polymérisation en radicaux de façon contrôlée en des points choisis du profil de température, de sorte qu'une conversion efficace soit obtenue en une durée acceptable. Dans la polymérisation du styrène, il est plus pratique de décrire les performances de décomposition de l'initiateur en terme de température de demi-vie à heure, définie comme étant la température suffisante pour entraîner la décomposition de la moitié de la concentration initiale en initiateur en une heure.

Traditionnellement, la polymérisation en suspension destinée à préparer le PSE est mise en œuvre dans un procédé utilisant deux paliers de température différents et deux initiateurs, un initiateur de premier palier et un initiateur de second palier ou de « finition » ; ces deux initiateurs ont des températures de demi-vie différentes, chacune adaptée au palier de température correspondant. Dans un tel procédé, le peroxyde de dibenzoyle (BPO) est souvent employé en tant qu'initiateur de premier palier à une température de réaction comprise entre environ 82 °C et 95 °C. Les autres initiateurs de premier palier pouvant être employés dans cet intervalle de température peuvent inclure le peroxy-2-éthylhexanoate de tert-butyle, le peroxy-2-éthylhexanoate de tertamyle et le 2,5-diméthyl-2,5-di(2-éthylhexanoylperoxy)hexane. Des initiateurs comme le peroxybenzoate de tert-butyle (commercialisé par Arkema sous la dénomination Luperox^{®} P), le OO-tert-butyl-O-(2-ethylhexyl)-monoperoxycarbonate (commercialisé par Arkema sous la dénomination Luperox^{®} TBEC) et le OO-tert-amyl-O-(2-ethylhexyl)-monoperoxycarbonate (commercialisé par Arkema sous la dénomination Luperox^{®} TAEC) sont largement employés pour le palier haut de température, ou second palier, à une température comprise entre 115 °C et 135 °C. Le second palier est généralement une étape de finition servant à minimiser la quantité de monomère résiduel dans le PSE. Dans les procédés à finalité commerciale, cette étape est souvent mise en œuvre à une température supérieure à 120 °C pendant une durée prolongée pour réduire la quantité de monomère jusqu'à une teneur inférieure à 1000 ppm jugée acceptable par la profession. Les défauts caractéristiques du procédé classique sont : au premier palier, la durée de réaction importante nécessaire à l'obtention d'une conversion suffisante pour fermer le réacteur lorsqu'une taille de particules de polystyrène désirée est atteinte, et au second pallier les températures de finition relativement importantes nécessaires.

L'usage de l'hémi-peroxyacétal 1-méthoxy-1-tert-amylperoxycyclohexane a été proposé pour remplacer le peroxyde de benzoyle employé traditionnellement autour de 88-92°C pour la première étape de conversion principale. Néanmoins, la température de demi-vie à une heure (« HLT 1h » pour « half life temperature for 1h ») de ce type de peroxyde étant plus élevée que celle du BPO, il est nécessaire d'effecturer la polymériserisation à plus haute température (typiquement 105-111°C) afin de permettre une conversion principale plus rapide. L'adoption, pour la première étape de conversion, d'une température de polymérisation supérieure au point d'ébullition du mélange de l'eau/styrène entraîne de nombreuses contraintes en exploitation. Tout d'abord, il est impossible d'opérer la première étape en réacteur ouvert, et donc de suivre la croissance des particules de polystyrène (PS) en cours de formation par simple échantillonnage manuel en cours de polymérisation de façon à éventuellement réajuster le système de suspension. Toute variation dans l'efficacité du système de suspension ne peut ainsi pas être détectée sauf à utiliser des caméras rapides permettant de suivre la croissance des particules de PS dans le mélange réactionnel, ceci au prix d'un lourd investissement. Par ailleurs, le profil thermique de la première étape de conversion nécessite une capacité de refroidissement bien supérieure à celle nécessaire à la conversion réalisée habituellement avec le peroxyde de benzoyle. Ceci peut donc conduire à un risque d'emballement de la réaction si la capacité de refroidissement n'est pas suffisante ou si le système d'asservissement du refroidissement n'est pas assez rapide.

Afin de remédier au flux thermique très élevé généré par une cinétique de polymérisation rapide avec les initiateurs de type hémi-peroxyacétals il a été proposé d'injecter le peroxyde organique en continu, ce qui supprime le risque d'emballement tout en permettant une génération de radicaux initiateurs plus régulière. Cette solution sécurise la polymérisation en évitant l'emballement de début de conversion mais ne règle cependant pas le problème que pose l'impossibilité de suivre facilement la croissance des particules et nécessite la mise en place d'un équipement particulier, tel qu'une cuve, une pompe additionnelle et des dispositifs de sécurité afin de réaliser l'injection du peroxyde organique en continu.

Il a été découvert de manière surprenante qu'un procédé particulier permettait de revenir à une situation plus conventionnelle de réacteur ouvert pendant la première phase de polymérisation opérée à la même température que celle réalisée avec le BPO habituellement, autorisant ainsi l'utilisation d'un équipement conventionnel et un contrôle des particules de polystyrène, tout en raccourcissant le cycle de production, permettant ainsi d'augmenter la production de polymère par rapport aux procédés classiquement utilisés.

Ainsi, la présente invention se rapporte à un procédé de polymérisation d'une suspension aqueuse de styrène à l'aide d'au moins un peroxyde organique hémi-peroxyacétal, ledit procédé comprenant une étape a) de maintien de ladite suspension aqueuse de styrène comprenant ledit peroxyde organique hémi-peroxyacétal à une température inférieure à la température de demi-vie à 1 heure dudit peroxyde organique hémi-peroxyacétal, de préférence inférieure de 5 à 25°C à la température de demi-vie à 1 heure dudit peroxyde organique, pendant au moins 30 minutes.
Au sens de la présente invention, par « maintien de la température », on entend que la température reste constante pendant toute la durée de l'étape a) ou de l'étape b) du procédé.
On entend par « température constante », un écart maximal de température entre le minima et le maxima de ladite étape inférieur à 10°C, de préférence inférieur à 5°C, de préférence inférieur à 2°C, encore préférentiellement inférieur à 1°C, encore préférentiellement inférieur à 0,5°C. Il est entendu que lesdits minima et maxima restent compris dans la gamme de température définis ci-dessous pour chacune des étapes a) et b).

Au sens de la présente invention, on entend par « comprise entre... et... » que les bornes sont incluses.

### Peroxyde organique (Hémi-peroxyacétal)

Le au moins un peroxyde organique utilisé conformément à la présente invention est choisi dans le groupe constitué par les hémi-peroxyacétals.

On entend par « hémi-peroxyacétal » un composé de formule générale (R₃)(R₄)C(-OR₁)(-OOR₂), dans laquelle :
- R₁ représente un groupement alkyle, linéaire ou ramifié, de préférence en C₁-C₁₂, de préférence de C₁-C₄, encore de préférence en C₁, ou un groupement cyclo alkyle avec R₂,
- R₂ représente un groupement alkyle, linéaire ou ramifié, de préférence en C₁-C₁₂, de préférence en C₄-C₁₂, encore de préférence en C₅, ou un groupement cyclo alkyle avec R₁,
- R₃ représente un hydrogène ou un groupement alkyle, linéaire ou ramifié, de préférence en C₁-C₁₂, encore de préférence en C₄-C₁₂, ou un groupement cyclo alkyle avec R₄,
- R₄ représente un hydrogène ou un groupement alkyle, linéaire ou ramifié, de préférence en C₁-C₁₂, encore de préférence en C₄-C₁₂, ou un groupement cyclo alkyle avec R₃.

De préférence R₃ forme un groupement cyclo alkyle avec R₄.

De préférence, lorsque R₃ est un hydrogène, R₄ est un groupement alkyle, linéaire ou ramifié, de préférence en C₁-C₁₂, encore de préférence en C₄-C₁₂.

De préférence, le peroxyde organique est choisi dans le groupe constitué par les hémi-peroxyacétals ayant une température de demi-vie à 1 heure comprise entre 100°C et 120°C, de préférence entre 104°C et 116°C encore préférentiellement entre 104°C et 110°C.

Le terme « température de demi-vie à une heure » représente la température pour laquelle la moitié du peroxyde organique s'est décomposée en une heure et à pression atmosphérique. Classiquement, la « température de demi-vie à une heure » est mesurée dans du n-décane ou le n-dodécane.

De préférence, le peroxyde organique selon l'invention est choisi dans le groupe constitué par les hémi-peroxyacétals répondant à la formule générale (I) suivante :

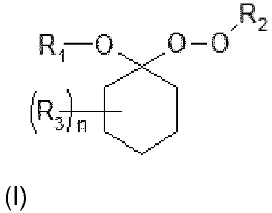

Formule (I) dans laquelle :
- R₁ représente un groupement alkyle, linéaire ou ramifié, en C₁-C₄, de préférence en C₁,
- R₂ représente un groupement alkyle ramifié en C₄-C₁₂, de préférence C₄-C₈, encore de préférence en C₅,
- R₃ représente un groupement alkyle, linéaire ou ramifié, en C₁-C₄, de préférence en C₁-C₃.
- n désigne zéro ou un entier variant de 1 à 3.

De préférence, R₁ représente un groupement alkyle, linéaire, en particulier en C₁-C₂, plus préférentiellement en C₁.

De préférence, R₂ représente un groupement alkyle ramifié en C₄-C₅, plus préférentiellement en C₅.

De préférence, n désigne zéro.

De préférence, R₃ représente un groupement alkyle, en C₁-C₂, plus préférentiellement en C₁.

Préférentiellement, dans la formule (I), R₁ représente un groupement alkyle, en C₁-C₂, R₂ représente un groupement alkyle ramifié en C₄-C₅ et n désigne zéro.

Encore plus préférentiellement, dans la formule (I), R₁ représente un groupement alkyle en C₁, R₂ représente un groupement alkyle ramifié en C₅ et n désigne zéro.

De préférence, le ou les peroxydes organiques est ou sont choisi(s) dans le groupe constitué par le 1-méthoxy-1-tert-amylperoxycyclohexane (TAPMC), le 1-méthoxy-1-t-butylperoxycyclohexane (TBPMC), le 1-méthoxy-1-t-amylperoxy-3,3,5-triméthylcyclohexane, le 1-éthoxy-1-t-amylperoxycyclohexane, le 1-éthoxy-1-t-butylperoxycyclohexane, le 1-éthoxy-1-t-buty1-3,3,5-peroxycyclohexane et leurs mélanges.

Encore plus préférentiellement, le peroxyde organique selon l'invention est le 1-méthoxy-1-tert-amylperoxycyclohexane (TAPMC).

De préférence, la teneur en hémi-peroxyacétal est comprise entre 0,05 et 3% en poids par rapport au poids des monomères de styrène, de préférence comprise entre 0,1 et 2% en poids par rapport au poids des monomères de styrène, et encore préférentiellement entre 0,3 et 1% en poids par rapport au poids des monomères de styrène.

### Peroxyde organique supplémentaire

Dans un mode d'application de l'invention, la suspension aqueuse comprend en outre au moins un peroxyde organique supplémentaire, différent dudit peroxyde organique hémi-peroxyacétal.

Ledit peroxyde organique supplémentaire peut être présent dans la suspension avant l'étape a), être ajouté au cours de l'étape a) ou après l'étape a), en particulier au cours de l'étape b).

De préférence, ledit peroxyde organique supplémentaire est ajouté avant l'étape a), encore de préférence lors ou juste après l'étape a') de préparation de la suspension aqueuse comprenant du styrène, encore préférentiellement juste après l'étape a').

Ledit peroxyde organique supplémentaire peut être de préférence choisi parmi tous les initiateurs de type peroxyde organique différents des hémi-peroxyacétals et dont la température de demi-vie à une heure, est comprise entre 105 °C et 130 °C, de préférence est comprise entre 110 °C et 122°C.

Dans l'un des modes de réalisation de l'invention, le peroxyde organique supplémentaire est choisi dans le groupe constitué par les monoperoxycarbonates de OO-t-alkyl-O-alkyle, où le groupement t-alkyle comprend entre 4 et 12 atomes de carbone, préférentiellement entre 4 et 5 atomes de carbone, et le groupement alkyle comprend entre 3 et 12 atomes de carbone, et préférentiellement 8 atomes de carbone, et leurs mélanges.

De préférence, ledit peroxyde organique supplémentaire est choisi dans le groupe consistant en le monoperoxycarbonate de OO-t-amyl-O-2-éthylhexyle (TAEC) et le monoperoxycarbonate de OO-t-butyl-O-2-éthylhexyle (TBEC), encore préférentiellement est le monoperoxycarbonate de OO-t-amyl-O-2-éthylhexyle.

Ces produits TAEC et TBEC sont commercialisés par la société ARKEMA sous les marques respectives « Luperox^{®} TAEC » et « Luperox^{®} TBEC ».

Selon un autre mode de réalisation préféré, le peroxyde organique supplémentaire est choisi dans le groupe constitué par les peracétals, de préférence choisi dans le groupe constitué par le 1,1-(di(tert-alkylperoxy)cyclohexane, de préférence 1,1-(di(tert-amyl peroxy)cyclohexane (vendu sous la dénomination Luperox^{®} 531 par Arkema), le 1,1-(di(tert-alkylperoxy)3,3,5 trialkylcyclohexane, de préférence 1,1-(di(tert-butyl peroxy)3,3,5 trimethylcyclohexane (vendu sous la dénomination Luperox^{®} 231 par Arkema), le 2,2-di(4,4-ditert-alkyleperoxycyclohexyl)alcane, de préférence 2,2-di(4,4-ditert-butylperoxycyclohexyl)propane et le polyether poly(tert-alkyl)-peroxycarbonate, de préférence le polyether poly(tert-butyl)-peroxycarbonate (vendu sous la dénomination JWEB50 par Arkema).

Alternativement, le peroxyde organique supplémentaire est choisi dans le groupe constitué par les peroxydes de diacyle, de préférence les peroxydes diacyle ayant une température de demi-vie comprise entre 80 et 100°C, encore préférentiellement comprise entre 85 et 95°C, encore préférentiellement est le dibenzoyle peroxyde (vendu sous la denomination Luperox^{®} A 75 par Arkema).

De préférence, le rapport en poids entre l'hémi-peroxyacétal et le peroxyde organique supplémentaire est compris entre 20 :1 et 2 :1, encore préférentiellement est compris entre 15 :1 et 5 :1, encore préférentiellement est compris entre 11:1 et 9 :1.

De préférence, le second peroxyde organique favorise la conversion finale du styrène.

Dans un mode de réalisation particulier, la suspension aqueuse ne comprend pas de OO-t-butyl-O-(2-éthylhexyle)-monoperoxycarbonate (TBEC), de préférence ne comprend aucun monoperoxycarbonate ni hydroperoxyde, et encore préférentiellement ne comprend pas de second peroxyde organique initiateur de polymérisation du styrène, de préférence ne comprend aucun peroxyde organique autre qu'un hémi-peroxyacétal et de manière particulièrement avantageuse ne comprend pas de second peroxyde organique.

Dans un mode de réalisation particulier, aucun OO-t-butyl-O-(2-éthylhexyle)-monoperoxycarbonate (TBEC), de préférence aucun monoperoxycarbonate ni hydroperoxyde, et encore préférentiellement aucun second peroxyde organique initiateur de polymérisation du styrène, de préférence aucun peroxyde organique autre qu'un hémi-peroxyacétal et de manière particulièrement avantageuse aucun second peroxyde organique n'est présent dans le procédé selon la présente invention.

### Etape a) (premier palier)

De préférence, l'étape a) dure au moins 30 minutes, de préférence entre 1 et 4 heures, préférentiellement entre 2 et 3 heures, encore préférentiellement environ 2 heures 30 minutes.

Ainsi, le procédé selon l'invention permet de réduire considérablement le temps de la première étape de conversion du styrène par rapport aux procédés de l'art antérieur, pour lesquels le premier pallier de température est d'environ 4 heures.

De préférence, l'étape a) est réalisée à une température inférieure de 5 à 25°C à température de demi-vie à 1 heure dudit peroxyde organique hémi-peroxyacétal, de préférence inférieure de 6 à 25°C à température de demi-vie à 1 heure dudit peroxyde organique hémi-peroxyacétal, encore préférentiellement inférieure de 10 à 20°C à température de demi-vie à 1 heure dudit peroxyde organique hémi-peroxyacétal. Préférentiellement, l'étape a) est réalisée à une température allant de 80°C à 100°C, de préférence de 80°C à moins de 100°C, préférentiellement à une température allant de 81°C à 99°C, préférentiellement à une température allant de 85°C à 95°C, préférentiellement entre 88°C et 93°C et encore préférentiellement à une température d'environ 90°C.

Ainsi, le procédé selon l'invention permet de réduire considérablement la température de chauffage de la première étape de conversion du styrène par rapport aux procédés de l'art antérieur utilisant des peroxydes organiques hémi-peroxyacétals, dans lesquels la première étape de conversion est réalisée à une température d'environ 110°C.

De plus, le procédé de l'invention permet le suivi de la croissance des particules de polystyrène, par prélèvements réguliers dans le milieu réactionnel en réacteur ouvert. Ceci n'était pas envisageable avec les procédés de l'art antérieur utilisant des peroxydes organiques hémi-peroxyacétals, qui nécessitent de travailler avec des réacteurs fermés du fait de la température de chauffage de la première étape bien supérieure.

Pour atteindre la température de l'étape a), il est nécessaire de chauffer le système. Cette étape de transition entre la température initiale du système, qui correspond généralement à une température comprise 5°C et 50°C, et la température de l'étape a) est appelée « rampe ».

De préférence, la rampe pour atteindre la température de l'étape a) est réalisée en au moins 30 minutes.

De préférence, la rampe pour atteindre la température de l'étape a) est réalisée en moins de 1h30.

De manière particulièrement préférée, la rampe pour atteindre la température de l'étape a) est réalisée en entre 30 minutes et 1h30.

### Etape b) (second palier)

De préférence, ledit procédé comprend une étape b), postérieure à l'étape a), de maintien de ladite suspension à une température supérieure ou égale à la température de demi-vie à 1h dudit peroxyde organique hémi-peroxyacétal, de préférence supérieure de 5 à 25°C par rapport à la température de demi-vie à 1h dudit hémi-peroxyacétal pendant au moins 30 minutes.

De préférence, l'étape b) dure au moins 30 minutes, de préférence entre 1 et 4 heures, préférentiellement entre 2 et 3 heures, encore préférentiellement environ 2 heures 30 minutes.

De préférence, l'étape b) est réalisée à une température supérieure ou égale à la température de demi-vie à 1 heure dudit peroxyde organique hémi-peroxyacétal, encore préférentiellement à une température comprise entre la température de demi-vie à 1 heure dudit peroxyde organique hémi-peroxyacétal et ladite température de demi-vie + 30°C. Préférentiellement, l'étape b) est réalisée à une température allant de 105°C à 140°C, encore préférentiellement à une température allant de 110°C à 130°C, et encore préférentiellement à une température d'environ 115°C. Ainsi, le procédé selon l'invention permet de réduire considérablement la température de chauffage de la seconde étape de conversion du styrène par rapport aux procédés de l'art antérieur utilisant des peroxydes organiques hémi-peroxyacétals. Ceci présente donc un avantage en terme de gain d'énergie, mais également de temps nécessaire pour passer de la température de l'étape a) à la température de l'étape b).

Pour passer de la température de l'étape a) à la température de l'étape b), il est nécessaire de chauffer davantage le système. Cette étape de transition entre l'étape a) et l'étape b) est appelée « rampe ». De préférence, la rampe entre l'étape a) et l'étape b) est réalisée en au moins 30 minutes.

De préférence, la rampe pour atteindre la température de l'étape b) est réalisée en moins de 1h30.

De manière particulièrement préférée, la rampe pour atteindre la température de l'étape b) est réalisée en entre 30 minutes et 1h30.

### Etape a') de préparation de la suspension aqueuse

De préférence, le procédé selon l'invention comprend une étape a') de préparation de la suspension aqueuse comprenant des monomères de styrène et au moins un peroxyde organique hémi-peroxyacétal. De préférence, cette étape a') est réalisée par mélange d'une suspension aqueuse comprenant le styrène à polymériser et ledit peroxyde organique hémi-peroxyacétal.

Au sens de la présente invention, on entend par « suspension aqueuse de styrène » une suspension aqueuse comprenant des monomères de styrène à polymériser.

Dans un mode de réalisation, la suspension aqueuse comprend également d'autres comonomères, différents du styrène, portant des insaturations éthyléniques, par exemple des alkylstyrènes, de l'alphaméthylstyrène, des esters d'acide acrylique et de l'acrylonitrile. Lesdits autres comonomères peuvent être ajoutés au mélange lors de l'étape a').

De préférence, lesdits comonomères représentent jusqu'à 15% de la masse total de monomères polymérisables.

De préférence, cette étape a') est réalisée avant tout chauffage de la suspension aqueuse.

Optionellement, un adjuvant peut être ajouté à ladite suspension lors de l'étape a'). De préférence, ledit adjuvant est choisi dans le groupe consistant en les agents ignifugeants, les retardateurs de flammes, éventuellement accompagnés d'un synergiste, les stabilisateurs de suspension inorganiques, comme le phosphate de calcium ou le pyrophosphate de magnésium, les stabilisateurs de suspension organiques, comme la polyvinylpyrrolidone, l'alcool polyvinylique ou l'hydroxyéthylcellulose, les tensioactifs, les agents de transfert de chaîne, les agents de nucléation, les auxiliaires d'expansion, les lubrifiants, les plastifiants, les anti-électrostatiques et leurs mélanges.

De préférence, au moins 80% en poids, de préférence au moins 90% en poids, de préférence au moins 95% en poids et le plus préférentiellement la totalité du peroxyde organique est ajouté à la suspension aqueuse comprenant les monomères de styrène avant l'étape a), encore préférentiellement avant tout chauffage de la suspension aqueuse.

De préférence, la suspension aqueuse comprend de l'eau et du styrène, de préférence dans un rapport en poids eau/styrène compris entre 20/80 et 80/20, de préférence compris entre 40/60 et 60/40 et encore préférentiellement compris entre 45/55 à 55/45.

Dans un mode de réalisation, la suspension aqueuse telle que définie ci-dessus comprend une charge athermane, de préférence du carbone. La présence de carbone permet d'obtenir du polystyrène noir de plus faible conductivité thermique que celle de l'EPS blanc. Ledit carbone peut être ajouté au mélange lors de l'étape a'). Il peut être accompagné d'un composé compatibilisant afin de favoriser son incorporation dans la matrice polystyrène.

De préférence, ledit carbone est choisi dans le groupe consistant en du graphite, du noir de carbone et des nanotubes de carbone, encore préférentiellement choisi dans le groupe consistant en du graphite et du noir de carbone.

De préférence, ledit carbone représente entre 0,1% et 15% en poids par rapport au poids des monomères de styrène, de préférence entre 0,5% et 8% en poids par rapport au poids des monomères de styrène.

### Addition d'un agent d'expansion

Le procédé selon l'invention peut également comprendre également une étape c) d'addition d'un agent d'expansion.

De préférence, ledit agent d'expansion est choisi dans le groupe constitué par les alcanes comportant entre 4 et 6 atomes de carbone et leurs mélanges.

L'agent d'expansion peut être ajouté à la suspension aqueuse pendant l'étape a), avant l'étape b), pendant l'étape b) et/ou après l'étape b).

De préférence l'agent d'expansion est ajouté avant l'étape b), de préférence entre l'étape a) et l'étape b) ou pendant l'étape b), encore préférentiellement pendant l'étape b).

Alternativement, les particules sphériques de polystyrène obtenues à la fin de l'étape b) sont triées par taille, puis l'agent d'expansion est ajouté aux particules sphériques triées. Ce mode d'application du procédé permet un contrôle plus précis de la taille des particules.

De préférence, cette étape d'ajout de l'agent d'expansion est suivie d'une étape d'imprégnation dudit agent d'expansion. Cette étape d'imprégnation permet une répartition homogène de l'agent d'expansion jusqu'au cœur des particules de polystyrène.

De préférence, ledit agent d'expansion est choisi dans le groupe constitué par le butane, le 2-méthylbutane, le n-pentane, l'isopentane le cyclohexane et leurs mélanges.

De façon préférentielle, ledit agent d'expansion est le n-pentane.

De préférence, l'agent d'expansion est ajouté à des teneurs comprises entre 5 et 10% en poids par rapport par rapport au poids des monomères de styrène.

La présente invention va à présent être illustrée plus avant par les exemples suivants.

### EXEMPLES :

Dans tous les exemples ci-après, la masse moléculaire du produit obtenu est mesurée par la méthode de chromatographie d'exclusion stérique (SEC) avec des étalons de polystyrène.

### EXEMPLE 1 : Synthèse du 1-méthoxy-1-t-amylperoxycyclohexane (TAPMC)

Un mélange d'hydroperoxyde de t-amyle (TAHP), de cyclohexanone et de méthanol est traité par de l'acide sulfurique à 70 % à une température comprise entre -6 °C et -4 °C. En quinze minutes, un mélange à l'équilibre de 1-méthoxy-1-t-amylperoxycyclohexane, de 1,1-di-(t-amylperoxy)-cyclohexane et des produits de départ n'ayant pas réagi, cyclohexanone et TAHP, se forme. Une petite quantité (environ 2 %) de cyclohexane-1,1-diméthyoxycétal (CDMK) est également obtenue dans le mélange réactionnel. Le mélange réactionnel est traité par de l'eau froide, puis la phase aqueuse est séparée de la phase organique, qui est purifiée par rinçage.

### EXEMPLE 2 : (comparatif) BPO/TBEC

Dans un réacteur en verre de 2 litres de type Büchi résistant à la pression de 8 bars, muni d'une double enveloppe et d'une agitation spécifique (agitateur à 3 pales sur deux niveaux) sont ajoutés à température ambiante et sous agitation 680 g d'eau déionisée avec 1,6g de phosphate tricalcique et 0,027g de dodecylbenzène sulfonate de sodium. Sont ensuite ajoutés toujours sous agitation 320 g de monomère styrène non déstabilisé avec 1,44g de Peroxyde de benzoyle (BPO) à 75% vendu sous le nom de grade Luperox^{®} A75 par la société Arkema et 0,42g de monoperoxycarbonate de OO-t-butyl-O-2-éthylhexyle (TBEC), commercialisé sous la marque Luperox^{®} TBEC par la société ARKEMA. Le réacteur est alors fermé et placé sous azote à une pression entre 1,8 et 2 bars. Cette suspension est ensuite amenée en 52 minutes à 90°C, puis maintenue à cette température pendant 4 heures pour le premier palier de polymérisation. Le milieu réactionnel est ensuite chauffé à 130°C en 42 minutes puis maintenu à cette température pendant 2 heures. Dans cet exemple, le premier palier de conversion est esssentiellement assuré par le BPO tandis que le second palier dit de finition de conversion met en œuvre essentiellement le TBEC. Le milieu réactionnel est ensuite refroidi rapidement en une demi heure afin de permettre la vidange du réacteur autour de 50°C. Après filtration et séchage une nuit à 50°C, on obtient un produit sous forme de particules régulières de diamètre inférieur à 1,4 mm présentant une masse moléculaire en poids (Mw) de 185700 g/mole, pour une polydispersité de 2,48 et contenant 385 ppm de monomère styrène résiduaire.

### EXEMPLE 3 : (Invention) TAPMC seul initiateur de conversion du styrène

Dans un réacteur identique à celui de l'exemple 2 sont ajoutés à température ambiante et sous agitation 680 g d'eau déionisée avec 1,6g de phosphate tricalcique et 0,029g de dodecylbenzène sulfonate de sodium. Sont ensuite ajoutés toujours sous agitation 320 g de monomère styrène avec 1,76g de 1-méthoxy-1-ter-amylperoxycyclohexane ( TAPMC) Cette suspension est ensuite amenée en 52 minutes 90°C. Le réacteur est alors laissé ouvert et la température maintenue pendant 2h30 à cette température pour le premier palier de polymérisation. Le réacteur est ensuite fermé et placé sous azote à une pression entre 1,8 et 2 bars. Le milieu réactionnel est ensuite chauffé à 115°C en 42 minutes puis maintenu à cette température pendant 2,5 heures. Le milieu réactionnel est ensuite refroidi rapidement en une demi heure afin de permettre la vidange du réacteur autour de 50°C. Dans cet exemple les deux paliers de conversion sont assurés par le TAPMC. Après filtration et séchage des particules une nuit à 50°C on obtient un produit sous forme de particules régulières de diamètre inférieur à 1,4 mm, présentant une masse moléculaire en poids (Mw) de 190700 g/mole, pour une polydispersité de 2,37 et contenant 990 ppm de monomère styrène résiduaire, valeur qui peut être considérée comme satisfaisant la valeur limite de 1000 ppm acceptée par la profession (voir le document US 6608150).

Selon cet exemple, on voit que malgré une température de premier plateau inférieure de 15°C à la température de demi-vie à 1 heure du TAPMC (soit 90°C versus 105°C), la conversion en fin de cycle reste pratiquement totale et les caractéristiques fondamentales de la résine sont préservées. Aucune perte de suspension n'a été observée dans la répétition de cet exemple.

L'invention permet de réduire la durée du cycle global par rapport à des conditions BPO/TBEC classiques.

## Revendications

1. Procédé de polymérisation d'une suspension aqueuse de styrène à l'aide d'au moins un peroxyde organique hémi-peroxyacétal, ledit procédé comprenant une étape a) de maintien de ladite suspension aqueuse de styrène comprenant ledit peroxyde organique hémi-peroxyacétal à une température inférieure à la température de demi-vie à 1 heure dudit peroxyde organique hémi-peroxyacétal, de préférence inférieure de 5 à 25°C à la température de demi-vie à 1 heure dudit peroxyde organique, pendant au moins 30 minutes.

2. Procédé de polymérisation selon la revendication 1, comprenant une étape b), postérieure à l'étape a), de maintien de ladite suspension à une température supérieure ou égale à la température de demi-vie à 1h dudit peroxyde organique hémi-peroxyacétal, de préférence supérieure de 5 à 25°C par rapport à la température de demi-vie à 1h dudit hémi-peroxyacétal pendant au moins 30 minutes.

3. Procédé de polymérisation selon l'une quelconque des revendications précédentes, dans lequel la température de demi-vie à 1h dudit peroxyde organique hémi-peroxyacétal est comprise entre 100°C et 120°C, de préférence entre 104°C et 116°C encore préférentiellement entre 104°C et 110°C.

4. Procédé de polymérisation selon l'une quelconque des revendications précédentes, dans lequel l'étape a) est réalisée à une température inférieure de 6 à 25°C à température de demi-vie à 1 heure dudit peroxyde organique hémi-peroxyacétal, encore préférentiellement inférieure de 10 à 20°C à température de demi-vie à 1 heure dudit peroxyde organique hémi-peroxyacétal.

5. Procédé de polymérisation selon l'une quelconque des revendications précédentes, dans lequel l'étape a) est réalisée à une température allant de 80°C à 100°C.

6. Procédé de polymérisation selon l'une quelconque des revendications précédentes, dans lequel l'étape a) est réalisée à une température allant de 80°C à moins de 100°C, préférentiellement à une température allant de 81°C à 99°C, préférentiellement à une température allant de 85°C à 95°C, préférentiellement entre 88°C et 93°C et encore préférentiellement à une température d'environ 90°C.

7. Procédé de polymérisation selon l'une quelconque des revendications 2 à 6, dans lequel l'étape b) est réalisée à une température allant de 105°C à 140°C, encore préférentiellement à une température allant de 110°C à 130°C, et encore préférentiellement à une température d'environ 115°C.

8. Procédé de polymérisation selon l'une quelconque des revendications précédentes, **caractérisée en ce que** le peroxyde organique est choisi dans le groupe constitué par les hémi-peroxyacétals répondant à la formule générale (I) suivante : 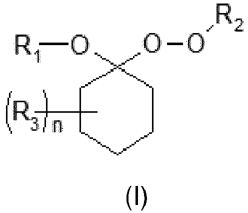 Formule (I) dans laquelle :
▪ R₁ représente un groupement alkyle, linéaire ou ramifié, en C₁-C₄, de préférence en C₁,
▪ R₂ représente un groupement alkyle ramifié en C₄-C₁₂, de préférence C₄-C₈, encore de préférence en C₅,
▪ R₃ représente un groupement alkyle, linéaire ou ramifié, en en C₁-C₄, de préférence en C₁-C₃.
▪ n désigne zéro ou est un entier variant de 1 à 3.

9. Procédé de polymérisation selon l'une quelconque des revendications précédentes, **caractérisée en ce que** le ou les peroxydes organiques hémi-peroxyacétals est ou sont choisis dans le groupe constitué par le 1-méthoxy-1-tert-amylperoxycyclohexane (TAPMC), le 1-méthoxy-1-t-butylperoxycyclohexane (TBPMC), le 1-méthoxy-1-t-amylperoxy-3,3,5-triméthylcyclohexane, le 1-éthoxy-1-t-amylperoxycyclohexane, le 1-éthoxy-1-t-butylperoxycyclohexane, le 1-éthoxy-1-t-buty1-3,3,5-peroxycyclohexane et leurs mélanges.

10. Procédé de polymérisation selon l'une quelconque des revendications précédentes, dans lequel le peroxyde organique est le 1-méthoxy-1-tert-amylperoxycyclohexane.

11. Procédé de polymérisation selon l'une quelconque des revendications précédentes, comprenant l'ajout d'un agent d'expansion, pendant l'étape a), avant l'étape b), pendant l'étape b) et/ou après l'étape b), de préférence avant l'étape b), de préférence entre l'étape a) et l'étape b, ou pendant l'étape b), encore préférentiellement pendant l'étape b).

12. Procédé de polymérisation selon l'une quelconque des revendications précédentes, dans lequel la suspension aqueuse ne comprend pas de OO-t-butyl-O-(2-éthylhexyle)-monoperoxycarbonate, de préférence ne comprend aucun monoperoxycarbonate ni hydroperoxyde, et encore préférentiellement ne comprend pas de second peroxyde organique initiateur de polymérisation du styrène, de préférence ne comprend aucun peroxyde organique autre qu'un hémi-peroxyacétal et de manière particulièrement avantageuse ne comprend pas de second peroxyde organique.

13. Procédé de polymérisation selon l'une quelconque des revendications précédentes, dans lequel la teneur en hémi-peroxyacétal est comprise entre 0,05 et 3% en poids par rapport au poids des monomères de styrène, de préférence comprise entre 0,1 et 2% en poids par rapport au poids des monomères de styrène, et encore préférentiellement entre 0,3 et 1% en poids par rapport au poids des monomères de styrène.

14. Procédé de polymérisation selon l'une quelconque des revendications précédentes, dans lequel au moins 80% en poids, de préférence au moins 90% en poids, de préférence au moins 95% en poids et le plus préférentiellement la totalité du peroxyde organique est ajouté à la suspension aqueuse comprenant les monomères de styrène avant l'étape a), encore préférentiellement avant tout chauffage de la suspension aqueuse.

15. Procédé de polymérisation selon l'une quelconque des revendications précédentes, dans lequel la suspension aqueuse telle que définie ci-dessus comprend une charge athermane, de préférence du carbone, de préférence est choisi dans le groupe consistant en du graphite, du noir de carbone et des nanotubes de carbone, encore préférentiellement choisi dans le groupe consistant en du graphite et du noir de carbone.
